(19) Europäisches Patentamt
European Patent Office
Office européen des brevets

(11) **EP 3 291 200 A1**

(12) **EUROPEAN PATENT APPLICATION**

(43) Date of publication:
**07.03.2018 Bulletin 2018/10**

(51) Int Cl.:
***G08G 1/09*** *(2006.01)*         *G08G 1/0967* *(2006.01)*
***G08G 1/16*** *(2006.01)*         *H04W 4/02* *(2018.01)*
***H04W 88/04*** *(2009.01)*

(21) Application number: **16187270.0**

(22) Date of filing: **05.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **NXP B.V.**
**5656 AG Eindhoven (NL)**

(72) Inventors:
• **Jaiswal, Sumit**
  **Redhill, Surrey RH1 1SH (GB)**
• **Chithambaran, Rajiv**
  **Redhill, Surrey RH1 1SH (GB)**

(74) Representative: **Terblanche, Candice Jane**
**NXP SEMICONDUCTORS**
**Intellectual Property Group**
**Abbey House**
**25 Clarendon Road**
**Redhill, Surrey RH1 1QZ (GB)**

(54) **INTELLIGENT TRANSPORTATION SYSTEM, HOST PROCESSOR, VEHICLE AND METHOD THEREFOR**

(57)    An intelligent transportation system (ITS) for a vehicle is described. The ITS includes a host processor; and a vehicle speed sensor; operably coupled to the host processor and arranged to provide vehicle speed information to the host processor.

FIG. 3

EP 3 291 200 A1

**Description**

Field of the invention

The field of the invention relates to an intelligent transportation system (ITS), a host processor, a vehicle and a method therefor. The invention is applicable to, but not limited to, a mechanism to adaptively control a rate of broadcast ITS messages.

Background of the invention

It is known that road usage by vehicles continues to increase, year on year. Increased road usage causes many problems, such as increased congestion, longer travel time, higher travel costs, increased air pollution, increased accident risk, etc. In order to cope with this steady increase, solutions are required to better manage vehicle road usage. A possible solution is to construct new roads, which is unlikely to happen on a large enough scale. A further solution is to reduce traffic and/or provide alternative transportation options, neither of which is viable in most practical scenarios.

A further solution that is being widely researched and developed is the use of intelligent traffic (or transportation) systems (ITSs). ITS is being developed for a variety of applications, such as a stationary vehicle warning following an accident or vehicle problem, traffic condition warning (such as a traffic jam ahead warning), regulatory/contextual speed limits, road work warnings, detour notifications, etc. Some ITS solutions propose a communication back bone employing V2X communication (i.e. a vehicle-to-vehicle infrastructure).

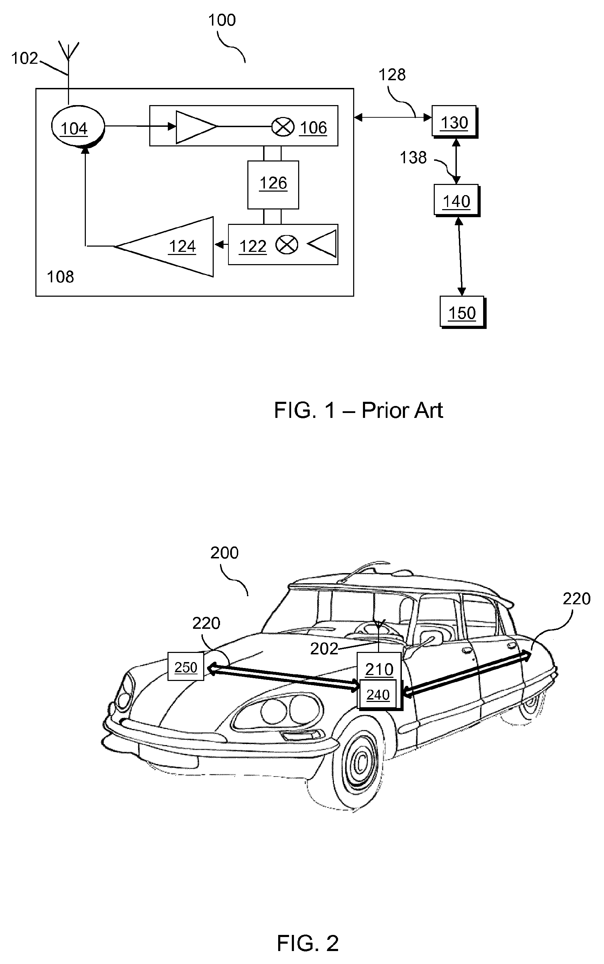

One known ITS 100 is shown in FIG. 1. ITS system 100 includes a wireless transceiver integrated circuit 108 that comprises wireless transmitter and a wireless receiver connected to an antenna 102. The receiver is arranged to receive ITS messages broadcast from other local vehicles or fixed roadside units. The transmitter is arranged to broadcast ITS messages to other local vehicles or fixed roadside units.

The wireless transceiver integrated circuit 108 is coupled to a BB circuit 130, which may be of the form of a digital signal processor (DSP) and comprise quadrature channel low pass filters (LPFs) and quadrature analog to digital converters ADCs. Communication between the wireless transceiver integrated circuit 108 and the BB circuit 130 may use the IEEE 802.11 p communication protocol.

The IEEE 802.11 p is an update to the IEEE 802.11 standard that adds wireless access in vehicular environments (WAVE), namely enhancements to 802.11 required to support ITS applications. This includes data exchange between high-speed vehicles and between the vehicles and the roadside infrastructure in the licensed ITS band of 5.9 GHz (5.85-5.925 GHz). IEEE 1609 is a higher layer standard based on the IEEE 802.11 p.

The BB circuit 130 performs the processing up to a data link layer (physical (PHY) layer and part of the medium access control (MAC) layer).

The system has a micro controller unit (MCU) 140 that is connected, via a universal signal bus (USB) 138, to the BB circuit 130 that executes a protocol 1609 stack, and thus converts IEEE1609 messages into RF signals for broadcasting. The MCU 140 is also coupled to a security circuit 150 that is used for signature generation for IEEE 1609.2 messages.

ITS 100 is thereby able to receive 802.11 p packets with messages from other vehicles and transmit 802.11 p packets with messages to other vehicles. In the current scenario 802.11 MAC would decide when a channel is free for it to broadcast the message. An ITS enabled vehicle sends $N_{max}$ messages/sec through a 802.11 p interface. The typical content of the message is the position of the vehicle. This broadcast information is therefore readily available to all other surrounding vehicles, which are similarly enabled. In this way, the surrounding vehicles can interrogate and process received ITS messages and build up an understanding of their surroundings vis-à-vis other vehicles or road events.

However, with an increase in the number of vehicles that are ITS-enabled, a typical scenario would be that, say, around 75 vehicles each send, say 10 ($N_{max}$) messages/second in the vicinity of traffic control signals. This results in a need to process around 750 messages/sec., in addition to processing any messages from associated infrastructure (e.g. roadside units). This causes congestion in the 802.11 p physical layer.

Summary of the invention

The present invention provides an intelligent transportation system, a host processor, a vehicle and a method therefor, as described in the accompanying claims.

Specific embodiments of the invention are set forth in the dependent claims.

These and other aspects of the invention will be apparent from and elucidated with reference to the embodiments described hereinafter.

Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified known block diagram of an intelligent transportation system.
FIG. 2 illustrates a simplified diagram of a vehicle employing an intelligent transportation system, according to example embodiments of the invention.
FIG. 3 illustrates a simplified example block diagram of an intelligent transportation system, according to example embodiments of the invention.
FIG. 4 illustrates a simplified example of a protocol stack that is used in an intelligent transportation system, according to example embodiments of the invention.
FIG. 5 illustrates a simplified example block diagram of a host processor configured to support an ITS, according to example embodiments of the invention.
FIG. 6 illustrates an example flow chart for obtaining, processing and using speed information in an intelligent transportation system, according to example embodiments of the invention.

Detailed description

The inventors of the present invention have recognized and appreciated that a lower rate of ITS messages broadcast from a vehicle can be tolerated, for example when the vehicle is moving slower, or indeed when the vehicle is stationary. The inventors have understood that as the vehicle surroundings change slowly, updates to the ITS messaged are less informative and therefore they are required less frequently.

Examples of the present invention provide an intelligent transportation system (ITS) for a vehicle, which includes a host processor; and a speed-related sensor. The speed-related sensor is operably coupled to the host processor and is arranged to provide vehicle speed-related information to the host processor, which in some examples may be speed and/or acceleration related information. In some examples, this information may be provided through a CAN network. In this manner, examples of the invention propose to include speed-related information to an ITS, for example such that the speed information is made available to a host processor (e.g. a micro controller unit (MCU).

In some examples, the host processor may be configured to process the speed information and adapt a rate of ITS messages that are broadcast from the vehicle in response to the speed information. In some examples, the host processor may reduce a rate of ITS messages that are broadcast from the vehicle, in response to processed speed information that identified that the vehicle is moving slower. In this manner, the host processor processes the speed information and, based thereon, may now be able to dynamically control (e.g. lower/throttle) the rate of messages it needs to broadcast, depending on the speed of the car.

Also, in some examples, a reduction in a rate of messages that are broadcast by the vehicle may create more channel bandwidth available for, say, roadside unit (RSU) and emergency messages to be broadcast.

In some examples, the host processor may be configured to process the speed-related information and pass the information to a human-machine interface (HMI) for displaying speed and/or acceleration data to a vehicle user (e.g. passenger or driver).

In some examples, the host processor may be configured to process the speed-related information and provide acceleration information, say via an audible or visual warning, indicative of sudden breaking of either the vehicle or surrounding vehicles.

In some examples, the host processor may be configured to process the speed-related information and log the data in memory, so that the data can be subsequently uploaded for use by, say, vehicle insurance agencies.

In some examples, the host processor may be configured to process the speed-related information and, perhaps, provide any excess speeding information to a V2X infrastructure for monitoring and broadcast to other users in the vicinity, e.g. for safety-related purposes.

In this manner, a number of applications for providing speed information to an MCU are envisaged.

Although examples of the invention are described with reference to vehicle speed sensors and/or additionally or alternatively GPS circuits and accelerometers, it is envisaged that in other examples any sensor that can generate an indication of a vehicle's speed can be used. Also, although examples are described with reference to a car, as illustrated in FIG. 2, it is envisaged that any road transport item may use the concepts herein described, such as trucks, motorcycles, buses, etc.

FIG. 2 illustrates a simplified diagram of a vehicle 200 employing an intelligent transportation system 210, according to example embodiments of the invention. In this example, the vehicle 200 includes an ITS 210 that comprises an MCU 240 operably coupled to other circuits and components (not shown). The MCU 240 is operably coupled to other components or circuits in the vehicle, e.g. a vehicle speed sensor 250, via, say, an integrated communication bus network 220, such as a Controller Area Network (CAN or CAN-bus) or a Local Interconnect Network (LIN). A CAN or CAN-bus is a vehicle bus standard that is designed to allow microcontrollers and devices to communicate with each other within a vehicle without a need for a host computer. CAN is a message-based protocol that is designed specifically for automotive applications, but which is now also used in other technology areas, such as industrial automation, medical equipment, etc. LIN is a serial network protocol used for communication between components in vehicles.

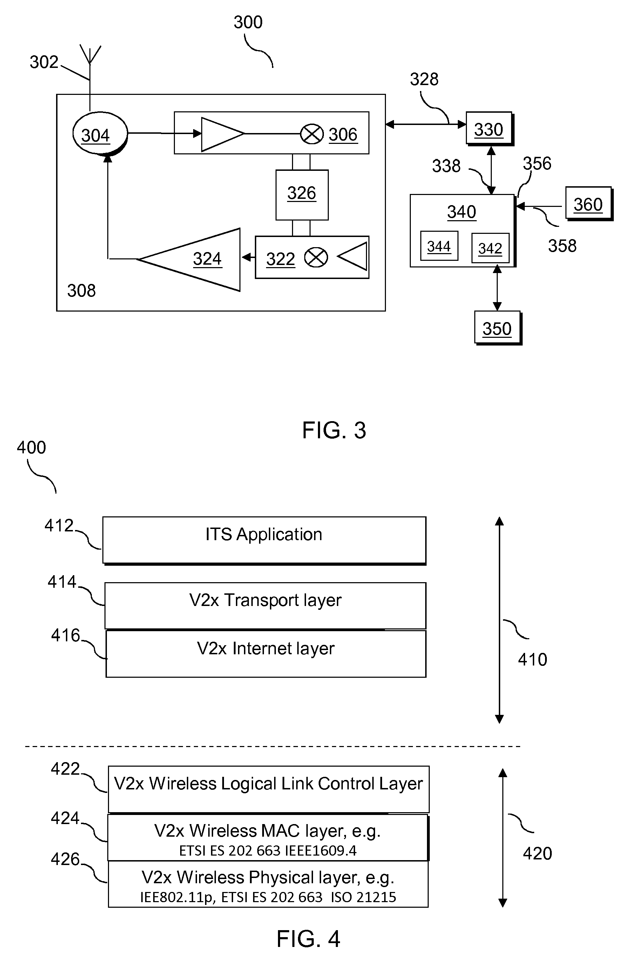

Referring now to FIG. 3, a simplified example block diagram of an intelligent transportation system (ITS) 300 is illustrated according to example embodiments of the invention. The ITS 300 includes a wireless transceiver integrated circuit 308 that comprises a wireless transmitter and a wireless receiver connected to an antenna 302 via an isolation component or circuit 304, which may be a duplex filter or antenna switch that isolates signals between the transmitter and receiver circuits. In this example, the wireless transceiver integrated circuit 308 is configured to operate at 2.4 GHz or 5.9 GHz.

One or more receiver chains, as known in the art, include(s) receiver front-end circuitry 306 (effectively providing reception, low-noise amplification, filtering and intermediate or base-band frequency conversion). In example embodiments, the receiver receives a radio frequency, RF, signal and converts the received RF signal to a digital quadrature received signal. The receiver front end circuit 306, for example, may comprise a low noise amplifier (LNA) coupled to two frequency downconversion quadrature mixers, fed from a quadrature local oscillator 326. The receiver front-end circuitry 306 is arranged to receive ITS messages broadcast from other local vehicles or fixed roadside units.

In a transmitter chain sense, the transmitter comprises quadrature frequency up-conversion circuit 322, which contains quadrature up-mixer circuit(s) and may contain amplification and additional filtering circuits, arranged to up-convert differential quadrature signals 328 from baseband (BB) circuit 330 which includes quadrature digital-to-analog converters (DACs). The frequency up-conversion circuit 322 combines the two resultant mixed quadrature signals before being input to power amplifier (PA) 324, which amplifies the combined signal prior to transmission. PA 324 outputs the up-converted and amplified transmit signal to isolation component or circuit 304 and thereafter antenna 302. The transmitter is arranged to broadcast ITS messages to other local vehicles or fixed roadside units.

The receiver front end circuit 206 is also coupled to a BB circuit 330, which may be of the form of a digital signal processor (DSP) and comprise quadrature channel low pass filters (LPFs) and quadrature analog to digital converters ADCs. Communication between the wireless transceiver integrated circuit 308 and the BB circuit 330 may use the 802.11 p communication protocol. The BB circuit 330 performs the processing up to a data link layer (physical (PHY) layer and part of the medium access control (MAC) layer).

The system has a micro controller unit (MCU) 340, sometimes referred to hereafter as a host processor, which is connected, via a universal signal bus (USB) 338 or secure digital input output (SDIO) or Ethernet interface, to the BB circuit 330.

The BB circuit 330 executes an IEEE1609 stack, and thus converts IEEE1609 messages into RF signals for broadcasting. The MCU 340 is also coupled to a security circuit 350 that is used for signature generation for IEEE1609.2 messages. A vehicle speed sensor 360 is connected to MCU 340 and provides vehicle-related data to the MCU 340 over a Controller Area Network (CAN or CAN-bus) or LIN 358.

The MCU 340 includes an input port 356 for operably coupling to a vehicle speed sensor; and a processing circuit 342 configured to process the speed information received from the vehicle speed sensor 360 and adapt a performance of the ITS of the vehicle in response thereto. The MCU 340 further includes an ITS message generation circuit 344 (which in some examples includes message generation and message rate control circuits), operably coupled to the processing circuit 342, wherein the processing circuit 342 is configured to process the speed information and adapt a rate of ITS messages that are generated by the ITS message circuit 344 to be broadcast from the vehicle in response to the speed information.

In some examples, the MCU 340 may be configured to support and process messages in an upper layer of the medium access control (MAC) layer of a communication protocol. If the MCU 340 determines, after processing the speed information, that the speed of the vehicle is reduced, the MCU 340 is configured to adapt a rate of ITS messages that are broadcast from the vehicle, in response to the speed information. In particular, the MCU 340 may reduce a rate of ITS messages that are broadcast from the vehicle in response to processed speed information that identified the vehicle is moving slower.

Thereafter, if the MCU 340 determines, after processing the speed information, that the speed of the vehicle has increased, the MCU 340 is configured to adapt a rate of ITS messages that are broadcast from the vehicle by increasing a rate of ITS messages that are broadcast from the vehicle in response to processed speed information that identified the vehicle is moving faster.

In this manner, a problem of congestion of ITS broadcast messages and ITS information in dense vehicle areas, e.g. in traffic jams, can be advantageously reduced.

For example when a host processor (or similar) of a vehicle determines that the vehicle is at a standstill, the host processor may determine that it would be sufficient to send one message/second, as compared to the normal 10 messages/second. Similarly, for example, when a host processor (or similar) of a vehicle determines that the vehicle is travelling above, say, 20kmph, the host processor may decide to broadcast, say, 5 messages/second. In the same vein, for example, when a host processor (or similar) of a vehicle determines that the vehicle is travelling above, say, and for speed above 40kmph, the host processor may decide to broadcast, say, 10 messages/second.

In some examples, the host processor may employ an algorithm that may be based, at least partly, on a relationship between a number of messages that are sent from the vehicle and a vehicle speed. In some examples, the relationship may be a proportional relationship according to equation [1]:

$$N_{effective} \quad \alpha \quad V_{vehicle} \qquad\qquad [1]$$

Where:

$N_{effective}$ is the number of messages sent out by the vehicle during a time period, equating to a rate of messages/second.
$V_{vehicle}$ is the speed of the vehicle.

It is envisaged that, in some examples, such a proportional relationship between a number of messages that are sent and a vehicle speed may be linear or non-linear in nature. In other examples, the adaptation of the message rate may not be linearly proportional to speed, and may instead be a logarithmic or exponential relationship.

Furthermore, in this manner and when employed in multiple vehicles, the ITS application itself, within each of a majority or all of a number of localised vehicles, may be configured to intelligently decide on a rate of messages that it is going to broadcast in a given time period. In this manner, a number of vehicles that are in a localised area and, say, moving slowly due to a traffic jam, will each reduce the rate of ITS messages that they broadcast, which will in turn reduce the number of received ITS messages that they receive and process. The vehicles use these ITS messages to calculate the positions of the vehicles around it. Therefore, even for a slow moving vehicle with a reduced rate of messages it is still possible to calculate its relative position, vis-à-vis other vehicles in its vicinity.

In some instances, this decision may subsequently include dynamically varying the rate of messages sent by each vehicle proportional to the speed of each vehicle. When applied by multiple vehicles, the rate of messages that each vehicle needs to process is effectively impacted. In some examples, in slow-moving traffic, it is envisaged that the vehicle may be configured to process only 75 messages/second, instead of a possible, say, 750 messages/second.

In some examples, the vehicle speed sensor may (additionally or alternatively) include a global positioning system (GPS) circuit, which may be configured to determine successive positions of the vehicle. Based on the determined successive positions of the vehicle, the GPS circuit, or the host processor, may be able to calculate a vehicle speed.

In some examples, the vehicle speed sensor may (additionally or alternatively) include an accelerometer, which may be configured to determine a movement of the vehicle, and in response thereto a speed. In some examples, the accelerometer indicates when the vehicle is moving, for example from a stationary position. When stationary, e.g. whilst in a traffic jam, the rate of messages being transmitted may be reduced to a minimum after, say, 10 seconds, and then the rate of messages is increased once the MCU 340 receives an indication from the accelerometer that the vehicle is moving again at a reasonable speed.

In some examples, the host processor may be configured to maintain a minimum rate of messages/second to be sent out. In this manner, the host processor ensures that other moving vehicles are informed about the vehicle's position. In some examples, the minimum rate of messages/second to be sent out may include any mandatory messages that are to be sent, such as safety messages, e.g. a SOS message, a vehicle breakdown message, a message following a crash, etc.

Referring now to FIG. 4, a simplified example of a protocol stack 400 that may be used in an intelligent transportation system is illustrated according to example embodiments of the invention. In this example, a host processor, such as MCU 240 from FIG. 2 or MCU from FIG. 3, is configured to perform a number of ITS functions 410. For example, the host processor may perform an ITS message generation application 412, which includes adaptively modifying a rate of broadcasting ITS messages to other vehicles. In this protocol stack example, the host processor may also be configured to perform a V2x Transport Layer function 414. In this protocol stack example, the host processor may also be configured to perform a V2x Internet layer function 416.

In accordance with some examples, a decision on whether to throttle the rate of messages, and if so how many messages are to be throttled, may be taken care of by the host processor performing an ITS application 412 based on the vehicle speed.

In this example, a transceiver integrated circuit, such as wireless transceiver integrated circuit 308 from FIG. 3, or BB circuit, such as BB circuit 330 from FIG. 3, is configured to perform a number of further ITS functions 420. For example, in this protocol stack example, one function employed by the transceiver integrated circuit or BB circuit may perform V2x Wireless logical link control (LLC) layer functionality 422, where V2x encompasses both vehicle to vehicle communications, as well as vehicle to infrastructure, e.g. roadside infrastructure. In this protocol stack example, the transceiver integrated circuit or BB circuit may also perform V2x Wireless medium access control (MAC) layer functionality 424, for example consistent with European Telecommunication Standards Institute (ETSI) ES 202 663 and in accordance with IEEE1609.4, In this protocol stack example, the transceiver integrated circuit or BB circuit may also perform V2x Wireless physical (PHY) layer functionality 426, for example consistent with IEE802.11 p, ETSI ES 202 663 and in accordance with ISO21215.

It is understood that the standards that are adopted around the World may vary, and thus the examples described above, when employed in other implementations, may be replaced by similar technologies or Standard specifications other than IEEE1609.

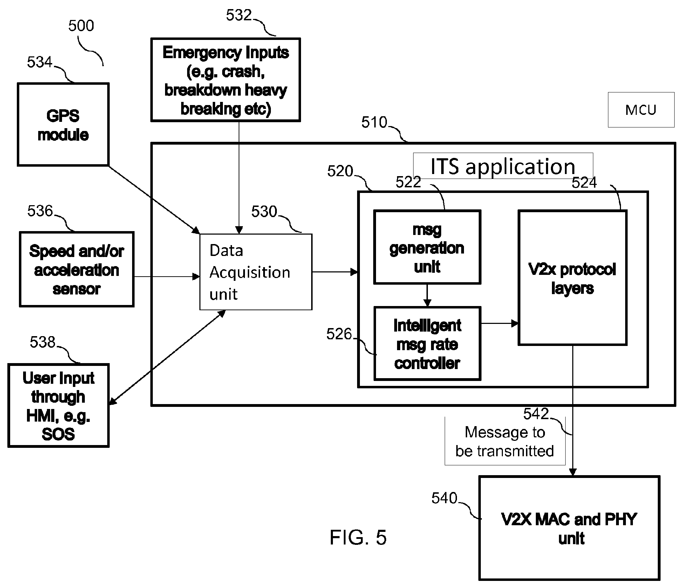

Referring now to FIG. 5, a simplified example block diagram 500 of a host processor 510, configured to support an ITS application circuit 520, is illustrated according to example embodiments of the invention. In the example block diagram 500, the host processor is the main or sub control unit in the vehicle. In some examples, the host processor 510 may have one or more micro controller units (MCUs), of which one of the MCUs might be configured to control the message rate and the Rx/Tx of the messages of the overall ITS application.

In this example, the host processor 510 includes a data acquisition circuit 530, which is operably coupled to a number of external circuits. For example, the data acquisition circuit 530 may be coupled to an emergency input circuit 532 configured to determine a vehicular crash, or a breakdown or heavy braking, etc.

In some examples, the data acquisition circuit 530 may be also coupled to a user interface circuit 538, for example a human-machine interface (HMI), which is capable of receiving an SOS message or displaying information relayed from emergency input circuit 532. In some examples, the host processor may be configured to process the speed-related information and pass the information to the user interface circuit 538 for displaying speed and/or acceleration data to a vehicle user (e.g. passenger or driver). In some examples, the data acquisition circuit 530 of the host processor 510 may be configured to process the speed-related information and provide warning information, say via an audible or visual warning, indicative of sudden breaking of either the vehicle or surrounding vehicles.

In accordance with some examples, the data acquisition circuit 530 of the host processor 510 is operably coupled, via an input port 512, to a speed-related sensor circuit 536, for example configured to determine, and provide to the host processor 510, a vehicle speed and/or acceleration. In some examples, this information may be provided through a CAN network.

In this example, the data acquisition circuit 530 is coupled to the ITS application circuit 520, which in some examples includes a message generation circuit 522, coupled to an intelligent message rate controller 526. In this manner, speed and/or acceleration information obtained from, say, speed-related sensor circuit 536 is processed by the data acquisition circuit 530 and routed to the ITS application circuit 520. Based on the speed and/or acceleration information, the intelligent message rate controller 526 adapts the rate of ITS messages that are generated by message generation circuit 522 and ultimately broadcast by the vehicle. In this example, the intelligent message rate controller 526 may employ an algorithm that is based, at least partly, on the relationship $N_{effective} \, \alpha \, V_{vehicle}$, where: $N_{effective}$ is the rate of messages sent out by the vehicle, and $V_{vehicle}$ is a determined speed of the vehicle. Thus, in this example, the ITS application circuit 520 includes one or more processing circuit(s) configured to process the speed information received from the vehicle speed sensor and adapt a performance of the ITS of the vehicle in response thereto, e.g. reduce a rate of ITS messages that are generated by the ITS message circuit 522 to be broadcast from the vehicle in response to the processed speed information identifying that the vehicle is moving slower. In some examples, even if the vehicle speed sensor information indicates that the vehicle is at a standstill, the rate of ITS messages that are generated by the ITS message circuit 522 may be reduced to a minimum, but non-zero, rate of messages/second to be broadcast by the ITS.

In some examples, the host processor may be configured to process the speed-related information and log the data in memory (not shown), so that the data can be subsequently uploaded for use by, say, vehicle insurance agencies.

In some examples, the host processor may be configured to process the speed-related information and provide any excess speeding information to a V2X infrastructure, e.g. for monitoring and broadcast to all users for safety-related purposes. In some examples, the data acquisition circuit 530 may be also coupled to a location determination circuit 534, such as a GPS circuit, in order to add location information to the

Thus, in this manner, a number of applications for providing speed information to an MCU are envisaged.

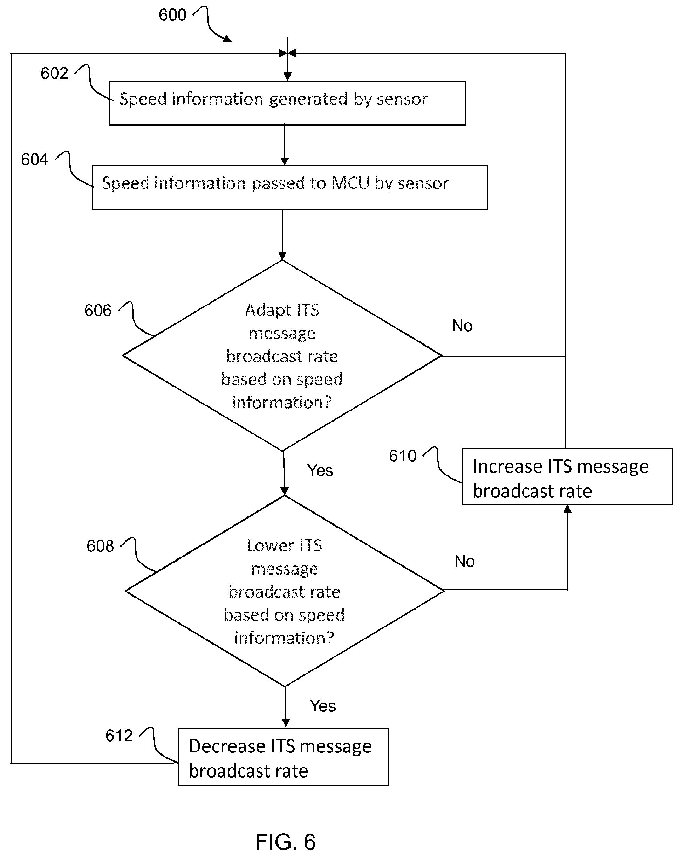

Referring now to FIG. 6, an example flow chart 600 illustrates a method for obtaining, processing and using speed information in an intelligent transportation system, according to example embodiments of the invention. The flowchart 600 starts with a vehicle speed sensor generating or obtaining speed information of the vehicle at 602. At 604, the speed information is passed to an MCU in the ITS. At 606, a determination is made, for example by the MCU, as to whether the ITS message broadcast rate should be adapted or changed based on the speed information. If the ITS message broadcast rate should not be adapted or changed based on the speed information at 606, e.g. there is little change in a vehicle speed over a period of time, the flowchart loops to 602 whereby further speed information is obtained.

However, if the ITS message broadcast rate should be adapted or changed based on the speed information at 606, a determination is made, for example by the MCU, as to whether the ITS message broadcast rate should be lowered at 608. If the ITS message broadcast rate should not be lowered based on the speed information at 608, an increased broadcast ITS message rate is adopted at 610 and the flowchart then loops to 602 whereby further speed information is obtained. In some examples, the broadcast ITS message rate may be increased at 610 by a fixed amount, or by an amount that is dependent upon the speed information.

However, if the ITS message broadcast rate should be lowered based on the speed information at 608, a decreased broadcast ITS message rate is adopted at 612 and the flowchart then loops to 602 whereby further speed information is obtained. In some examples, the broadcast ITS message rate may be decreased at 612 by a fixed amount, or by an amount that is dependent upon the speed information.

In some examples, the host processor may be configured to provide vehicle speed information to a vehicle to vehicle or vehicle to roadside (V2X) infrastructure, as in 614. In some examples, the host processor may be configured to store the vehicle speed sensor information in memory for subsequent uploading, as in 616.

In some examples, the circuits herein described may be implemented using discrete components and circuits, whereas in other examples the circuit may be formed in integrated form in an integrated circuit. Because the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

A skilled artisan will appreciate that the level of integration of processor circuits or components may be, in some instances, implementation-dependent. Furthermore, a single processor or MCU may be used to implement a processing of both speed information, say from a vehicle speed sensor, as well as processing transmit signals for broadcast and/or received ITS signals from other vehicles, as well as some or all of the other mentioned MCU functions. Clearly, the various components within the ITS 300 can be realized in discrete or integrated component form, with an ultimate structure therefore being an application-specific or design selection.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. For example, the host processor for an intelligent transportation system, ITS, for a vehicle, may be implemented as circuitry located on a single integrated circuit. Here, the host processor circuitry comprises an input port for operably coupling to a vehicle speed sensor; and a processing circuit configured to process the speed information received from the vehicle speed sensor and adapt a performance of the ITS of the vehicle in response thereto. Alternatively, the circuit and/or component examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one, or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1. An intelligent transportation system, ITS, for a vehicle, the ITS comprising:

   a host processor; and
   a vehicle speed sensor; operably coupled to the host processor and arranged to provide vehicle speed information to the host processor.

2. The ITS of Claim 1 wherein the host processor is configured to process the speed information and adapt a rate of ITS messages that are broadcast from the vehicle in response to the speed information.

3. The ITS of Claim 2 wherein the host processor employs an algorithm that is based, at least partly, on the relationship $N_{effective}\ \alpha\ V_{vehicle}$, where: $N_{effective}$ is the rate of messages sent out by the vehicle, and $V_{vehicle}$ is a determined speed of the vehicle.

4. The ITS of Claim 2 or Claim 3 wherein the host processor reduces a rate of ITS messages that are broadcast from the vehicle in response to processed speed information that identified the vehicle is moving slower.

5. The ITS of any Claim 3 or Claim 4 wherein the relationship is one of: a linear relationship, a non-linear relationship, an exponential relationship, a logarithmic relationship.

6. The ITS of any preceding Claim wherein the host processor is coupled to the vehicle speed sensor via at least one from a group of: a CAN network, a LIN network.

7. The ITS of any preceding Claim wherein, when the host processor determines that the vehicle is at a standstill, the host processor configures a minimum, non-zero, rate of messages/second to be broadcast by the ITS.

8. The ITS of any preceding Claim wherein the vehicle speed sensor comprises or is coupled to at least one of a global positioning system, GPS, circuit, an accelerometer, coupled to the host processor, such that the host processor is configured to determine a speed of the vehicle based on information provided by the GPS circuit or accelerometer.

9. The ITS of any preceding Claim wherein the host processor is configured to provide vehicle speed information to a vehicle to vehicle or vehicle to roadside (V2X) infrastructure.

10. The ITS of any preceding Claim wherein the host processor is configured to store the vehicle speed sensor information in memory for subsequent uploading.

11. The ITS of any preceding Claim wherein the host processor is coupled to a human-machine interface, HMI, in a vehicle and configured to route the vehicle speed sensor information to the HMI for relaying the speed sensor information to a vehicle user.

12. A host processor for an intelligent transportation system, ITS, for a vehicle, the host processor comprising:

an input port for operably coupling to a vehicle speed sensor; and
a processing circuit configured to process the speed information received from the vehicle speed sensor and adapt a performance of the ITS of the vehicle in response thereto.

13. The host processor of Claim 12 further comprising an ITS message generation circuit, operably coupled to the processing circuit, wherein the processing circuit is configured to process the speed information and adapt a rate of ITS messages that are generated by the ITS message circuit to be broadcast from the vehicle in response to the speed information.

14. A method for operating an intelligent transportation system, ITS, for a vehicle, the method comprising, at a host processor:

receiving vehicle speed information from a vehicle speed sensor;
determining whether to adapt an ITS message broadcast rate based on speed information; and
adapting the vehicle's ITS message broadcast rate based on the speed information.

15. A vehicle comprising an integrated intelligent transportation system, ITS, for a vehicle, the ITS comprising:

a host processor; and
a vehicle speed sensor; operably coupled to the host processor and arranged to provide vehicle speed information to the host processor.

FIG. 1 – Prior Art

FIG. 2

300

302

304 306

328

330

326

338 356

340

360

344 342

358

350

308 324 322

**FIG. 3**

400

412 ITS Application

414 V2x Transport layer

416 V2x Internet layer

410

422 V2x Wireless Logical Link Control Layer

424 V2x Wireless MAC layer, e.g.
ETSI ES 202 663 IEEE1609.4

426 V2x Wireless Physical layer, e.g.
IEE802.11p, ETSI ES 202 663  ISO 21215

420

**FIG. 4**

534

500

532

**Emergency Inputs
(e.g. crash,
breakdown heavy
breaking etc)**

**GPS
module**

MCU

510

ITS application

520

522

524

536

530

**Speed and/or
acceleration
sensor**

Data
Acquisition
unit

**msg
generation
unit**

**V2x protocol
layers**

526

**Intelligent
msg rate
controller**

538

**User Input
through
HMI, e.g.
SOS**

542

Message to
be transmitted

540

**V2X MAC and PHY
unit**

FIG. 5

600

602
Speed information generated by sensor

604
Speed information passed to MCU by sensor

606
Adapt ITS message broadcast rate based on speed information?

No

610
Increase ITS message broadcast rate

Yes

608
Lower ITS message broadcast rate based on speed information?

No

Yes

612
Decrease ITS message broadcast rate

FIG. 6

Europäisches
Patentamt

European
Patent Office

Office européen
des brevets

# EUROPEAN SEARCH REPORT

Application Number

EP 16 18 7270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/106364 A1 (SAGISAKA ATSUSHI [JP]) 29 April 2010 (2010-04-29) | 1-5,7-9, 12-15 | INV. G08G1/09 |
| A | * paragraph [0039] - paragraph [0045] * * paragraph [0056] * * figure 10 * | 6,10 | ADD. G08G1/0967 G08G1/16 |
| X | US 2005/099321 A1 (PEARCE JAMES W [US]) 12 May 2005 (2005-05-12) | 1-5,8,9, 11-15 | H04W4/02 H04W88/04 |
| A | * paragraph [0020] - paragraph [0022]; figures 1,2 * * paragraph [0048] * | 6,7,10 | |
| X | US 2009/081958 A1 (MCNEW JUSTIN PAUL [US] ET AL) 26 March 2009 (2009-03-26) | 1-5,7,9, 10,14,15 | |
| A | * paragraph [0002] - paragraph [0007] * * paragraph [0017] - paragraph [0026] * * paragraph [0048] * | 6,8, 11-13 | |
| X | US 2010/188265 A1 (HILL LAWRENCE W [US] ET AL) 29 July 2010 (2010-07-29) | 1-3,6, 8-15 | |
| A | * paragraph [0047] - paragraph [0052] * * paragraph [0064] - paragraph [0070]; figures 3,5 * | 4,5,7 | TECHNICAL FIELDS SEARCHED (IPC) |
| | | | G08G H04W |

The present search report has been drawn up for all claims

| Place of search | Date of completion of the search | Examiner |
|---|---|---|
| The Hague | 6 March 2017 | Nanos, Alexander |

EPO FORM 1503 03.82 (P04C01)

**EP 3 291 200 A1**

## ANNEX TO THE EUROPEAN SEARCH REPORT
## ON EUROPEAN PATENT APPLICATION NO.

EP 16 18 7270

This annex lists the patent family members relating to the patent documents cited in  the above-mentioned European search report.
The members are as contained in the European Patent Office EDP file on
The European Patent Office is in no way liable for these particulars which are merely given for the purpose of information.

06-03-2017

| Patent document cited in search report | | Publication date | Patent family member(s) | | Publication date |
|---|---|---|---|---|---|
| US 2010106364 | A1 | 29-04-2010 | CN | 101617350 A | 30-12-2009 |
| | | | EP | 2130193 A2 | 09-12-2009 |
| | | | JP | 2008245268 A | 09-10-2008 |
| | | | KR | 20090113309 A | 29-10-2009 |
| | | | US | 2010106364 A1 | 29-04-2010 |
| | | | WO | 2008104886 A2 | 04-09-2008 |
| US 2005099321 | A1 | 12-05-2005 | NONE | | |
| US 2009081958 | A1 | 26-03-2009 | NONE | | |
| US 2010188265 | A1 | 29-07-2010 | NONE | | |

EPO FORM P0459

For more details about this annex : see Official Journal of the European Patent Office, No. 12/82

15